# FASCICULE DE BREVET EUROPEEN

(11) **EP 1 429 417 B1**
(45) Date de publication et mention de la délivrance du brevet: **10.05.2006**
(21) Numéro de dépôt: 02406006.3
(22) Date de dépôt: 21.11.2002
(51) Int. Cl.: H01Q 1/42, G06K 19/077, G06K 19/02, G06K 7/08

(54) **Lecteur et transpondeur en boîtiers**
Leser und Transponder in Gehäusen
Reader and transponder within housings

(43) Date de publication de la demande: 16.06.2004
(73) Titulaire: Optosys SA, 1762 Givisiez (CH)
(72) Inventeur: Cuperus, Johan, 1400 Yverdon-les-Bains (CH); Heimlicher, Peter, 1700 Fribourg (CH)
(74) Mandataire: AMMANN PATENTANWÄLTE AG BERN

(56) Documents cités:
- EP-A- 0 782 214
- WO-A-00/21031
- WO-A-02/055315
- DE-A- 19 755 893
- DE-A- 19 807 284

## Description

Les développements de l'automatisation nécessitent l'identification des produits, des outils et des opérations telles que fabrication, emballage et stockage. Les systèmes à code-barre très connus présentent de nombreux défauts. On peut signaler la détérioration physique ou chimique des étiquettes et l'impression ou le gravage du code-barre sur la pièce à identifier, qui n'est souvent pas possible à cause de la qualité et de la couleur du matériel. D'autre part, l'analyse visuelle du code-barre n'autorise pas la projection de liquides ou la présence de films d'huile sur le code-barre, ce qui est très souvent le cas dans les environnements industriels.

Le système d'identification sans contact à transpondeur (RFID) constitue une nouvelle solution qui présente de nombreux avantages. Le transpondeur est une étiquette passive qui capte l'énergie du champ magnétique émis par le lecteur. Le transpondeur sera alors en mesure de communiquer au lecteur une information contenue dans sa mémoire. Il pourra, dans certains cas, modifier cette information sur demande du lecteur. Cette nouvelle capacité constitue un avantage important par rapport aux autres systèmes d'identification.

Le transpondeur est généralement enrobé dans une matière isolante de façon à ne pas entraver l'induction magnétique. Une difficulté réside dans la fixation ou l'incorporation des transpondeurs aux produits à identifier. Leur application sur des objets métalliques perturbe le fonctionnement des transpondeurs et limite leur sensibilité.

Les fabricants ont cherché à dépasser ces difficultés et à réaliser des transpondeurs fonctionnant dans le voisinage d'éléments métalliques et résistant aux agressions industrielles. Sont connus des éléments emballés dans une enveloppe métallique qui n'est pas complètement fermée, afin de permettre la propagation du champ magnétique vers le transpondeur. Ainsi, une ouverture est matérialisée par une fente fine ou par un raccord de deux surfaces de rugosité suffisante. La demande de brevet WO02/055315 équivalente à EP 1288016A décrit un dispositif de communication avec une enveloppe métallique qui n'est pas complètement fermée, afin de permettre la propagation du champ magnétique vers son antenne. Ainsi, une ouverture est matérialisée par une fente fine et il est proposé de remplir cette fente d'une matière isolante comme par exemple de la colle afin de maintenir la fente. Malheureusement, ces endroits deviennent des points faibles de l'étanchéité pour des transpondeurs devant fonctionner dans des milieux agressifs. Ils ne permettent pas non plus de garantir un nettoyage suffisant en cas d'équipements destinés à la production ou à l'emballage de produits alimentaires ou médicaux.

Des lecteurs comportant une protection métallique de la bobine d'antenne ne sont pas connus actuellement. De ce fait, le capot plastique peut représenter une protection insuffisante face aux agents agressifs. Les interstices de collage de ce capot peuvent se fissurer et se contaminer; il est dès lors impossible d'assurer un nettoyage efficace.

Il est un objet de la présente invention de réaliser un transpondeur et un lecteur qui se prêtent à un emploi dans des milieux agressifs et qui permettent de garantir un nettoyage suffisant pour l'emploi dans des équipements destinés à la production ou à l'emballage de produits alimentaires ou médicaux, et ceci avec des performances de fonctionnement comparables aux produits existant actuellement sur le marché. Cet objet est atteint avec un transpondeur selon la revendication 1 et un lecteur selon la revendication 2.

L'invention sera expliquée en se référant aux dessins annexés d'un mode d'exécution.
- La figure 1: représente un transpondeur emballé dans un boîtier métallique fermé par un couvercle soudé, et
- La figure 2: montre un lecteur dont l'antenne et les circuits de communication sont protégés par une douille métallique.

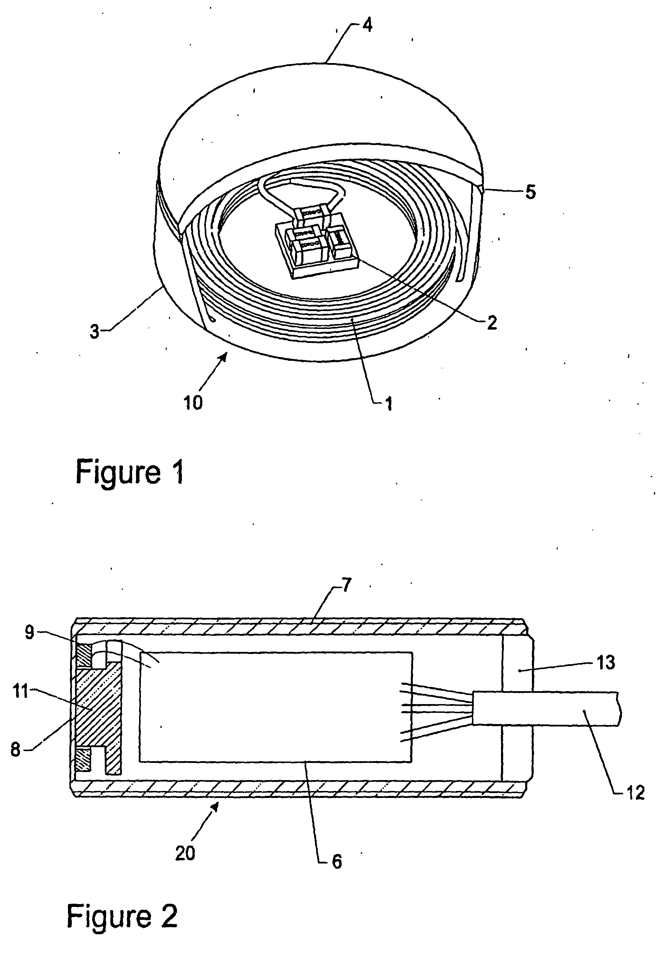

Le transpondeur 10 montré en coupe partielle sur la figure 1 est constitué d'une bobine 1 qui, associée à un condensateur et à une résistance non dessinés, forme une antenne résonnante, ainsi que d'une puce électronique 2 comportant un contrôleur de communication performant et une mémoire reprogrammable. Ces éléments sont assemblés dans un boîtier métallique 3 qui est fermé par un couvercle 4, par exemple soudé, où la soudure 5 est visible.

Le lecteur 20 représenté en coupe par la figure 2 contient, dans une douille métallique cylindrique 7 avec paroi métallique relativement mince 8, une bobine 9 associée à un condensateur et à une résistance non dessinés formant le circuit d'antenne. Un élément à grande perméabilité en ferrite 11 agit sur la forme du champ magnétique et privilégie le rayonnement vers l'avant du lecteur à travers la plaque de front 8 du boîtier. Le circuit électronique 6 avec le câble électrique 12 sorti d'une manière étanche par le bouchon 13 du boîtier réalise les différentes fonctions du lecteur, à savoir :
- Génération de l'onde porteuse et modulation de celle-ci par l'information de commande destinée au transpondeur.
- Filtrage et traitement du signal généré par le transpondeur.
- Gestion du dialogue avec le transpondeur et de la communication avec l'utilisateur au travers d'une interface sérielle.

Afin d'atteindre les buts de cette invention, il a été nécessaire d'optimiser des paramètres et des éléments importants, ainsi que les circuits électroniques du transpondeur et du lecteur. Le choix de la fréquence doit tenir compte de la profondeur de pénétration du rayonnement magnétique dans les deux parois métalliques qui absorbent une partie de l'énergie et se comportent à leur tour en antenne secondaire. En fonction de la fréquence, le rayonnement de cette antenne secondaire interfère avec le rayonnement primaire et provoque des distorsions et de grandes variations du signal détecté.

Les caractéristiques mécaniques et électriques du matériel constituant ces parois métalliques sont très importantes. Cette paroi doit présenter une bonne protection mécanique, une résistance élevée aux solvants et ne pas s'oxyder. Afin de permettre une profondeur de pénétration du rayonnement suffisante, la résistivité électrique de ce matériel ne doit pas être trop faible et ce dernier ne doit pas être magnétique.

Dans le cas d'application de RFID soumis aux contraintes de l'environnement industriel, il apparaît que l'acier inoxydable offre les performances les plus intéressantes, mais l'invention n'est pas limitée à ce matériel. Si un autre matériel était souhaité tel que métal précieux ou anticorrodal, une adaptation des moyens de cette invention est possible. Dans cet exemple d'exécution, l'acier inoxydable DIN 1.4305 ou AISI 303 a été choisi et les optimisations ont été faites à partir des caractéristiques de ce matériel.

Ainsi, pour obtenir une transmission de signal efficace avec des interférences minimales au travers des parois d'acier inoxydable de par exemple 0,2 à 0,5 mm, la fréquence de l'onde porteuse a été choisie dans une gamme de 20 à 50 kHz. Il est entendue qu'un autre matériel et une autre épaisseur des parois peut nécessiter des autres fréquences de l'onde porteuse.

La forme des bobines d'antenne influence aussi l'intensité du rayonnement au travers des parois métalliques. Ce rayonnement est le plus grand lorsque le bobinage présente une surface de contact maximale avec la paroi. La section de bobinage a donc été choisie de forme rectangulaire afin de permettre un couplage maximal de son flanc avec la paroi. L'optimisation du rayonnement a aussi montré qu'un entrefer, non montré, devait être ménagé à l'arrière de la bobine.

Cette bobine forme, à l'aide d'un condensateur, une antenne résonnante. La fréquence de résonance et le facteur de qualité de ce circuit sont également déterminants pour rendre l'antenne moins sensible aux éléments métalliques environnants. Afin de contrôler ce facteur de qualité, une résistance de valeur convenable est choisie pour la bobine de ce circuit d'antenne résonnante. Comme exemple, dans le cas du transpondeur, cette résistance se situe entre 1000 et 3000 Ohms pour une bobine d'environ 50 mH, alors que dans le cas du lecteur, la valeur optimale est comprise entre 100 et 300 Ohms avec une bobine d'environ 3 mH.

La fréquence de résonance de cette antenne n'est pas accordée sur la fréquence de l'onde porteuse. Une meilleure extraction des signaux modulés est possible lorsque cette fréquence de résonance est supérieure de 5 à 20% par rapport à la porteuse.

Le circuit de filtrage assure une mise en forme du signal de modulation généré par le transpondeur. Ce signal est très affaibli suite à la traversée des deux parois métalliques. Son amplitude varie grandement en fonction de la distance séparant le transpondeur et le lecteur. Une mise en forme avec différentiation permet un bon fonctionnement du détecteur, avec de larges variations des signaux, afin qu'il puisse restituer le signal de modulation malgré les interférences et les distorsions de saturation présentes sur la porteuse.

## Revendications

1. Transpondeur avec une antenne et un circuit électronique de contrôle contenus dans un boîtier. métallique, **caractérisé par le fait que** le boîtier est fermé hermétiquement et présente une paroi métallique non magnétique, de sorte que le circuit électronique de contrôle (2) ne peut communiquer, via l'antenne, qu'au travers de cette paroi métallique.

2. Lecteur avec une antenne et comprenant un boîtier métallique non magnétique, **caractérisé par le fait que** l'antenne est protégée de l'environnement par une plaque de front métallique (8) faisant corps avec le boîtier (7, 13) contenant.le circuit électronique de contrôle (6).

3. Lecteur selon la revendication 2, **caractérisé en ce que** le boîtier possède une fermeture herpétique.

4. Transpondeur ou lecteur selon l'une des revendications 1 à 3, **caractérisés par le fait que** le boitier est réalisé en acier inoxydable avec une paroi entre 0,2 et 0,5mm et la fréquence de l'onde porteuse est située entre 20 et 50 kHz.

5. Transpondeur ou lecteur selon l'une des revendications 1 à 4, **caractérisés par le fait que** les bobines (1, 9) d'antenne sont de section rectangulaire avec le grand côté de la bobine couplé étroitement à la paroi métallique du boîtier.

6. Transpondeur ou lecteur selon la revendication 5, **caractérisés par le fait qu'**un entrefer est ménagé à l'arrière des bobines, vis-à-vis du boîtier (4) ou de l'élément en ferrite (11).

7. Transporteur et lecteur selon l'une des revendications 1 à 6, **caractérisés par le fait que** la fréquence de résonance de l'antenne est supérieure de 5 à 20% par rapport à la porteuse.

8. Transpondeur et lecteur selon l'une des revendications 1 à 7, **caractérisés par le fait que** le facteur de qualité de l'antenne résonnante est dégradé de manière contrôlée par une résistance.

9. Lecteur selon la revendication 2, **caractérisé par le fait qu'**il comporte in circuit de réception qui est précédé par un filtre différentiateur.

## Patentansprüche

1. Transponder mit einer Antenne und einer elektronischen Kontrollschaltung in einem Metallgehäuse, **dadurch gekennzeichnet, dass** das Gehäuse hermetisch verschlossen ist und eine nichtmagnetische Metallwand aufweist, so dass die elektronische Kontrollschaltung (2), über die Antenne, nur durch diese Wand hindurch kommunizieren kann.

2. Leser mit einer Antenne und einem nichtmagnetischen Metallgehäuse, **dadurch gekennzeichnet, dass** die Antenne durch eine Frontplatte (8) aus Metall vor der Umgebung geschützt ist, die einstückig mit dem die elektronische Kontrollschaltung (6) enthaltenden Gehäuse (7, 13) ausgebildet ist.

3. Leser nach Anspruch 2, **dadurch gekennzeichnet, dass** das Gehäuse hermetisch verschlossen ist.

4. Transponder oder Leser nach einem der Ansprüche 1 bis 3, **dadurch gekennzeichnet, dass** das Gehäuse aus rostfreiem Stahl mit einer Wanddicke zwischen 0,2 und 0,5 mm hergestellt ist und die Frequenz der Trägerwelle zwischen 20 und 50 kHz liegt.

5. Transponder oder Leser nach einem der Ansprüche 1 bis 4, **dadurch gekennzeichnet, dass** die Antennenspulen (1, 9) im Schnitt rechteckig sind, wobei die grosse Seite der Spule eng mit der Metallwand des Gehäuses gekoppelt ist.

6. Transponder oder Leser nach Anspruch 5, **dadurch gekennzeichnet, dass** hinter den Spulen, gegenüber dem Gehäuse (4) oder dem Ferritelement (11) ein Luftspalt angeordnet ist.

7. Transponder und Leser nach einem der Ansprüche 1 bis 6, **dadurch gekennzeichnet, dass** die Resonanzfrequenz der Antenne 5 bis 20 % über der Trägerfrequenz liegt.

8. Transponder und Leser nach einem der Ansprüche 1 bis 7, **dadurch gekennzeichnet, dass** der Gütefaktor der Resonanzantenne durch einen Widerstand kontrolliert vermindert wird.

9. Leser nach Anspruch 2, **dadurch gekennzeichnet, dass** er eine Empfängerschaltung mit vorgeschaltetem Differenzierfilter aufweist.

## Claims

1. Transponder having an antenna and an electronic control circuit that are contained in a metallic enclosure, **characterized in that** the enclosure is hermetically sealed and has a metallic, non-magnetic wall such that the electronic control circuit (2) can only communicate, via the antenna, through this metallic wall.

2. Reader having an antenna and comprising a metallic, non-magnetic enclosure, **characterized in that** the antenna is protected from the environment by a metallic front plate (8) that is integral with the enclosure (7, 13) containing the electronic control circuit (6).

3. Reader according to claim 2, **characterized in that** the enclosure is provided with a hermetical seal.

4. Transponder or reader according to one of claims 1 to 3, **characterized in that** the enclosure is made of stainless steel with a wall thickness between 0.2 and 0.5 mm and the frequency of the carrier wave is situated between 20 and 50 kHz.

5. Transponder or reader according to one of claims 1 to 4, **characterized in that** the antenna coils (1, 9) are rectangular in cross-section with the large side of the coil closely coupled to the metallic wall of the enclosure.

6. Transponder or reader according to claim 5, **characterized in that** an air gap is provided at the rear of the coils, opposite the enclosure (4) or opposite the ferrite element (11).

7. Transponder and reader according to one of claims 1 to 6, **characterized in that** the resonance frequency of the antenna is 5 to 20 % higher than that of the carrier.

8. Transponder and reader according to one of claims 1 to 7, **characterized in that** the Q factor of the resonant antenna is degraded in a controlled manner by a resistor.

9. Reader according to claim 2, **characterized in that** it comprises a reception circuit that is preceded by a differentiating filter.
